# EUROPÄISCHE PATENTANMELDUNG

(11) **EP 1 398 597 A1**
(43) Veröffentlichungstag der Anmeldung: **17.03.2004**
(21) Anmeldenummer: 03102606.5
(22) Anmeldetag: 20.08.2003
(51) Int. Cl.: G01B 11/02

(54) **Konfokaler Abstandssensor**

(30) Priorität: 12.09.2002 DE 10242374
(71) Anmelder: SIEMENS AKTIENGESELLSCHAFT, 80333 München (DE)
(72) Erfinder: Schick, Anton, 84149, Velden (DE)

(57) **Zusammenfassung**

Die Erfindung schafft einen Sensor zur schnellen optischen Abstandsmessung nach dem konfokalen Abbildungsprinzip. Der Sensor umfasst eine Lichtquelle (210), welche ein Beleuchtungslicht (212) mit verschiedenen Spektralanteilen emittiert, und eine Abbildungsoptik (230), durch welche das Beleuchtungslicht (212) auf die Oberfläche (240) eines Messobjekts gerichtet wird, wobei aufgrund einer chromatischen Aberration der Abbildungsoptik (230) unterschiedliche Spektralanteile des Beleuchtungslichts (212) in unterschiedlichen Abständen von der Abbildungsoptik (230) fokussiert werden. Ferner ist ein Strahlteiler (220), welcher derart angeordnet ist, dass Messlicht (252), welches von der Oberfläche (240) zumindest teilweise zurückreflektiert wird, von dem Strahlengang des Beleuchtungslichts (212) räumlich getrennt wird, ein Lichtempfänger (250), welcher das von dem Strahlengang des Beleuchtungslichts (212) räumlich getrennte Messlicht (252) mit einer spektralen Auflösung erfasst, sowie eine Auswerteeinheit vorgesehen, welche aus den für verschiedene Spektralanteile erfassten Intensitäten des Messlichts (252) den Abstand zwischen dem Sensor (200) und der Oberfläche (240) ermittelt.

## Beschreibung

Die Erfindung betrifft einen Sensor zur schnellen optischen Abstandsmessung nach dem konfokalen Abbildungsprinzip.

Durch die immer weiter steigende Integrationsdichte auf elektronischen Baugruppen nimmt die Zahl der Anschlüsse von elektronischen Bauelementen stetig zu. Um diesem Trend zu entsprechen, wurden Montage- und Kontaktierungsverfahren entwickelt, bei denen die Bauelemente mittels Lotkugeln auf der Unterseite der Bauelemente mit Anschlussflächen auf einem zu bestückenden Substrat kontaktiert werden. Derartige Bauelemente sind beispielsweise sog. Ball-Grid-Arrays (BGA) oder Flip-Chips. Um eine zuverlässige Kontaktierung zu gewährleisten, müssen die Anschlüsse vor dem Bestücken genau inspiziert werden, da nach dem Bestücken fehlerhafte Anschlüsse, die zu einem schlechten elektrischen Kontakt zwischen Bauelement und den Anschlussflächen führen, nicht mehr detektiert werden können.

Um elektronische Baugruppen kostengünstig und mit hoher Qualität herstellen zu können, werden an moderne Inspektionssysteme für elektrische Bauelemente eine Vielzahl von Anforderungen gestellt. So muss das Inspektionssystem in der Lage sein, die Parameter des Inspektionsgegenstandes, wie beispielsweise dessen Abmessungen, die Koplanarität der elektrischen Anschlüsse oder die Teilung der Anschlüsse zu bestimmen. Ferner soll die Inspektion innerhalb einer möglichst kurzen Prüfzeit durchführbar sein, niedrige Kosten verursachen und berührungslos arbeiten. Diese hohen Anforderungen für die Vermessung von dreidimensionalen Oberflächen können in der Regel nur von optischen Verfahren zur Vermessung von Oberflächenprofilen erfüllt werden. Als optische Inspektionsverfahren sind in diesem Zusammenhang sog. Laufzeitverfahren, Triangulationsverfahren und konfokale Verfahren bekannt.

Zu den Laufzeitverfahren, bei denen der Abstand zwischen Sensor und der zu vermessenden Oberfläche aus der Laufzeit eines von der Oberfläche zurückreflektierten Lichtpulses bestimmt wird, zählen im weiteren Zusammenhang auch die sog. interferometrischen Verfahren, welche durch Überlagerung von kohärenten Lichtstrahlen sehr hohe räumliche Auflösungen erzielen können. Das Interferenzsignal wird durch eine mechanische Bewegung eines optischen Elements eines Interferometers bzw. einer Veränderung der optischen Weglänge innerhalb eines Interferometers erzeugt. Dabei sind insbesondere für eine flächenhafte Bildaufnahme einer zu vermessenden Oberfläche relativ lange Messzeiten erforderlich.

Zu den Triangulationsverfahren zählen alle Verfahren, bei denen die Beleuchtung- oder Projektionsrichtung von der Beobachtungsrichtung abweicht. Auch Verfahren, die mittels strukturierter Beleuchtung arbeiten (z.B. Moire-Verfahren), werden hierzu gerechnet, da die Deformation der auf die zu erfassende Oberfläche projizierten Muster, aus welcher Deformation die Höhenlage einzelner Oberflächenpunkte berechnet wird, nur unter einem bestimmten Triangulationswinkel beobachtet werden kann. Die Vermessung von dreidimensionalen Oberflächenprofilen mittels einer strukturierten Beleuchtung setzt idealerweise isotrop streuende Objektoberflächen voraus, da anisotrop streuende Oberflächen, d.h. zumindest leicht spiegelnde Oberflächen aufgrund einer Spiegellinsenwirkung nicht die Deformation der strukturierten Beleuchtung durch die dreidimensionale Oberfläche wiedergeben können. Da die Zuverlässigkeit der Messergebnisse sehr stark von dem Reflexionsverhalten der zu vermessenden Oberfläche abhängig ist, ist eine Lotkugelinspektion mittels einer strukturierten Beleuchtung in der Regel unmöglich bzw. äußerst schwer zu realisieren.

Zu den Triangulationsverfahren zählen außerdem sog. Laser-Triangulationsverfahren, bei denen die zu vermessende Oberfläche mit einem Laserstrahl abgetastet und der Auftreffpunkt des Laserstrahls von einer Kamera erfasst wird. Schnelle Ablenkeinheiten, wie beispielsweise rotierende Polygonspiegel oder Galvanometerscanner dienen hierbei zur definierten Ablenkung des Laserstrahls. Alternativ kann durch eine Bewegung des zu vermessenden Objekts eine Relativbewegung zwischen dem Objekt und dem Laserstrahl erzeugt werden. Messungen mittels Laser-Triangulation haben den Nachteil, dass mehrere Oberflächenpunkte nicht simultan, sondern nur zeitlich nacheinander abgetastet werden können, so dass die resultierenden Prüfzeiten entsprechend lang sind.

Konfokale optische Verfahren zur Vermessung von dreidimensionalen Oberflächen zeichnen sich durch eine hohe Auflösung und durch eine hohe Robustheit gegenüber von Sekundärreflexen erzeugtem Streulicht aus. Ferner haben konfokale optische Verfahren den Vorteil, dass die Oberflächenvermessung koaxial erfolgen kann, so dass Abschattungsprobleme durch schräg auf die Oberfläche treffendes Beleuchtungslicht bzw. durch einen zu der Oberfläche schrägen Beobachtungswinkel nicht auftreten. Die konfokale Mikroskopie, welche bereits seit langem bekannt ist, stellt demzufolge ein sehr präzises, jedoch langsames Verfahren zur dreidimensionalen Oberflächenvermessung dar. Herkömmlichen konfokale Abstandsensoren haben zudem den Nachteil, dass zur Abstandmessung eine periodische Relativbewegung zwischen dem Sensor und der zu vermessenden Oberfläche erforderlich ist, so dass aufgrund der Massenträgheit der zu bewegenden Massen die Abtastrate zusätzlich begrenzt ist.

Aus der EP 835423 B1 ist ein modifizierter konfokaler Sensor zur dreidimensionalen Oberflächenvermessung bekannt, bei dem durch eine schnelle Fokusverschiebung, welche durch einen mechanisch bewegten Retroreflektor bewirkt wird, unter Verwendung einer zeilenförmigen Anordnung von einer Vielzahl von Laserstrahlen eine zügige Oberflächenvermessung ermöglicht wird. Die Bildaufnahme ist dabei vergleichbar mit einer Zeilenkamera, mittels welcher durch eine Bewegung des zu vermessenden Objekts und/oder der Kamera in einer Richtung senkrecht zu der Kamerazeile im Prinzip Endlosbilder aufgenommen werden können. Aus diesem Grund eignet sich der modifizierte konfokale Sensor auch zum Vermessen von größeren Objekten wie Wafer oder Substrate. Da die Bildbreite durch die Länge der abgetasteten Zeile bestimmt wird, müssen größere Bildbereiche durch ein mäanderförmiges Abtasten der Oberfläche vermessen werden. Der modifizierte konfokale Sensor hat den Nachteil, dass die erforderliche Fokusverschiebung durch eine Bewegung des Retroreflektors erzeugt wird, so dass zwar eine gegenüber herkömmlichen konfokalen Abstandsensoren geringere Masse bewegt werden muss, die Massenträgheit des bewegten Retroreflektor aber trotzdem die Abtastrate begrenzt.

Der Erfindung liegt somit die Aufgabe zugrunde, einen Sensor zur schnellen optischen Abstandsmessung nach dem konfokalen Abbildungsprinzip zu schaffen, welcher zur Abstandsbestimmung zwischen dem Sensor und einem Oberflächenpunkt weder eine Relativbewegung zwischen Sensor und zu vermessender Oberfläche noch eine mechanische Bewegung einer optischen Komponente des Sensors erfordert.

Diese Aufgabe wird gelöst durch einen Sensor zur schnellen optischen Abstandsmessung nach dem konfokalen Abbildungsprinzip mit den Merkmalen des unabhängigen Anspruchs 1. Der Erfindung liegt die Erkenntnis zugrunde, dass die chromatische Aberration, welche üblicherweise einen unerwünschter Abbildungsfehler einer dispersiven Abbildungsoptik darstellt und welche deshalb in dem meisten Linsensystemen korrigiert wird, in vorteilhafter Weise für einen konfokalen Abstandsensor ausgenutzt werden kann. Die Tatsache, dass aufgrund der chromatischen Aberration unterschiedliche Spektralanteile eines Beleuchtungsstrahls in unterschiedlichen Abständen von der Abbildungsoptik fokussiert werden, wird gemäß der Erfindung dahingehend ausgenutzt, dass die spektrale Verteilung eines Messlichts, welches von der Oberfläche zumindest teilweise zurückreflektiert und nach einem erneuten Durchgang durch die Abbildungsoptik von einem spektral auflösenden Lichtempfänger erfasst wird, ein Maß für den Abstand zwischen dem Sensor und der Oberfläche ist. Dabei ist der Lichtempfänger konfokal zu der das Beleuchtungslicht emittierenden Lichtquelle angeordnet. Anders ausgedrückt werden die verschiedenen Spektralanteile des Beleuchtungslichts durch die chromatische Aberration der Abbildungsoptik derart räumlich aufgespalten, dass die Fokuspunkte für unterschiedliche Spektralanteile im Objektbereich übereinander liegen. Befindet sich nun ein Objekt im Objektbereich, so wird bevorzugt derjenige Spektralanteil auf den Lichtempfänger abgebildet, welcher mit einem möglichst kleinen Fokus auf die zu vermessende Oberfläche trifft. Damit wird die konfokale Bedingung bevorzugt nur für eine Spektralfarbe erfüllt. Die Farbe des mit der größten Intensität detektierten Lichtes ist demzufolge ein Maß für den Abstand zwischen dem erfindungsgemäßen Sensor und dem Fokuspunkt, welcher auf der Objektoberfläche liegt. Der Höhenmessbereich des Sensors ist durch die Stärke der chromatischen Aberration der Abbildungsoptik bestimmt, wobei für die Abbildungsoptik bevorzugt bewusst chromatisch fehlkorrigierte Linsen oder Linsensysteme verwendet werden können. Der erfindungsgemäße konfokale Abstandsensor ermöglicht somit eine Abstandsbestimmung mit einer einzigen Farbbildaufnahme, wobei auf vorteilhafter Weise weder eine Bewegung einer optischen Komponente des Sensors noch eine Relativbewegung zwischen dem gesamten Sensor und dem Messobjekt erforderlich ist. Die Auflösung des konfokalen Abstandssensors wird durch die numerische Apertur der Abbildungsoptik, die Stärke der chromatischen Aberration der Abbildungsoptik sowie durch das spektrale Auflösungsvermögen des Lichtempfängers bestimmt. Der erfindungsgemäße Sensor eignet sich besonders gut für Messobjekte, welche das Beleuchtungslicht nahezu farbneutral reflektieren, da in diesem Fall eine Abstandsbestimmung ohne eine Farbkalibrierung möglich ist. Derartig farbneutrale Reflexionen treten bei Metallen oder Legierungen häufig auf, welche üblicherweise als elektrische Verbindungsmaterialien zwischen elektronischen Bauelementen und Substraten verwendet werden. Aus diesem Grund kann der erfindungsgemäße Sensor insbesondere für Inspektionen im Elektronikbereich verwendet werden, da in diesem Bereich, wie oben beschrieben, herkömmliche optische Inspektionsverfahren häufig mit einer großen Ungenauigkeit behaftet sind.

Gemäß Anspruch 2 wird auch das Messlicht über die Abbildungsoptik geführt, so dass die Höhenauflösung des Sensors direkt proportional zu dem Quadrat der numerischen Apertur NA ist. Zudem kann der Sensor in einer besonders kompakten Bauweise realisiert werden.

Nach Anspruch 3 ist die Lichtquelle eine Weißlichtquelle, welche auf besonders einfache Weise eine breite spektrale Verteilung des Beleuchtungslichts liefert.

Die Verwendung einer Farbkamera als Lichtempfänger nach Anspruch 4 hat den Vorteil, dass keine zusätzlichen optisch auflösenden Elemente, wie beispielsweise Gitter oder Prismen erforderlich sind, da die spektrale Auflösung des Messlichts unmittelbar durch den Lichtempfänger erfolgt.

Die Ausführungsform nach Anspruch 5, bei der das Beleuchtungslicht von einer bestimmten Punktlichtquelle auf einen bestimmten Oberflächenpunkt trifft und von diesem bestimmten Oberflächenpunkt auf einen konfokal zu der Punktlichtquelle angeordneten und der Punktlichtquelle zugeordneten bestimmten Punktdetektor trifft, können gleichzeitig mehrere Oberflächenpunkte vermessen werden. Auf diese Weise kann mittels einer einzigen Farbbildaufnahme bei entsprechender Anzahl von Punktlichtquellen und Punktdetektoren ein komplettes dreidimensionales Oberflächenprofil eines Messobjekts erfasst werden.

Die Weiterbildung nach Anspruch 6 ermöglicht eine besonders einfache Realisierung von mehreren Lichtquellen und Lichtempfängern. Dabei kann eine Mehrzahl von Lichtquellen dadurch erzeugt werden, dass ein entsprechendes Blendensystem mit einer Mehrzahl von Lochblenden vor einer flächigen Lichtquelle angeordnet wird. Die Mehrzahl von Punktdetektoren kann am besten durch einen ortsauflösenden Flächendetektor realisiert werden, welcher hinter einem entsprechenden Blendensystem mit einer Mehrzahl von Lochblenden angeordnet ist.

Die Verwendung einer Mikrolinsen-Anordnung nach Anspruch 8 hat den Vorteil, dass die Lichtausbeute des Blendensystems erhöht ist. Demzufolge ist auch die auf den Lichtempfänger treffende Intensität des Messlichts erhöht. Ein weiterer Vorteil bei der Verwendung einer Mikrolinsen-Anordnung ergibt sich, wenn die Mikrolinsen-Anordnung derart aufgebaut ist, dass das Licht gezielt auf die Blenden fokussiert wird und demzufolge unerwünschte Streueffekte reduziert sind. In diesem Fall ist jeder Lochblende genau ein Linsenelement der Mikrolinsen-Anordnung zugeordnet.

Die Verwendung eines Zwischenbildes der Lichtquelle nach Anspruch 9 hat den Vorteil, dass der Sensor gleichzeitig ein konfokales Mikroskop mit einer großen lateralen Auflösung darstellt. Für die Anordnung der weiteren Abbildungsoptik innerhalb des Sensors ergeben sich zwei Möglichkeiten. (a) Die weitere Abbildungsoptik befindet sich in dem gemeinsamen Strahlengang von Beleuchtungslicht und Messlicht zwischen der Abbildungsoptik und dem Strahlteiler. (b) Die weitere Abbildungsoptik befindet sich nur in dem Strahlengang des Beleuchtungslichtes zwischen der Lichtquelle und dem Strahlteiler. In diesem Fall wird bevorzugt eine weitere Abbildungsoptik eingesetzt, welche sich ausschließlich in dem Strahlengang des Messlichtes zwischen dem Strahlteiler und dem Lichtempfänger befindet.

Gemäß Anspruch 10 ist im Bereich des Zwischenbildes ein Blendensystem angeordnet, so dass auf vorteilhafte Weise die konfokale Bedingung unabhängig von der genauen Anordnung der Lichtquelle und des Lichtempfängers erfüllt ist.

Die Verwendung einer rotierenden Nipkow-Scheibe gemäß Anspruch 11 ermöglicht ein sequentielles Abtasten der zu vermessenden Oberfläche mittels einer einzigen Farbbildaufnahme, welche über eine gewisse Zeit belichtet wird.

Die Verwendung einer stationären Lochblendenmatrix gemäß Anspruch 12 in Verbindung mit einem entsprechend der Lochblendenmatrix ortsauflösenden Flächendetektor hat den Vorteil, dass mehrere Oberflächenpunkte des Messobjekts gleichzeitig abgetastet werden können. Als Flächendetektor eignet sich insbesondere eine CCD-Zeile bzw. eine CCD-Kamera.

Weitere Vorteile und Merkmale der vorliegenden Erfindung ergeben sich aus der folgenden beispielhaften Beschreibung derzeit bevorzugter Ausführungsformen.
- Figur 1: zeigt einen einkanaligen konfokalen optischen Abstandssensor.
- Figur 2: zeigt einen mehrkanaligen konfokalen optischen Abstandssensor.

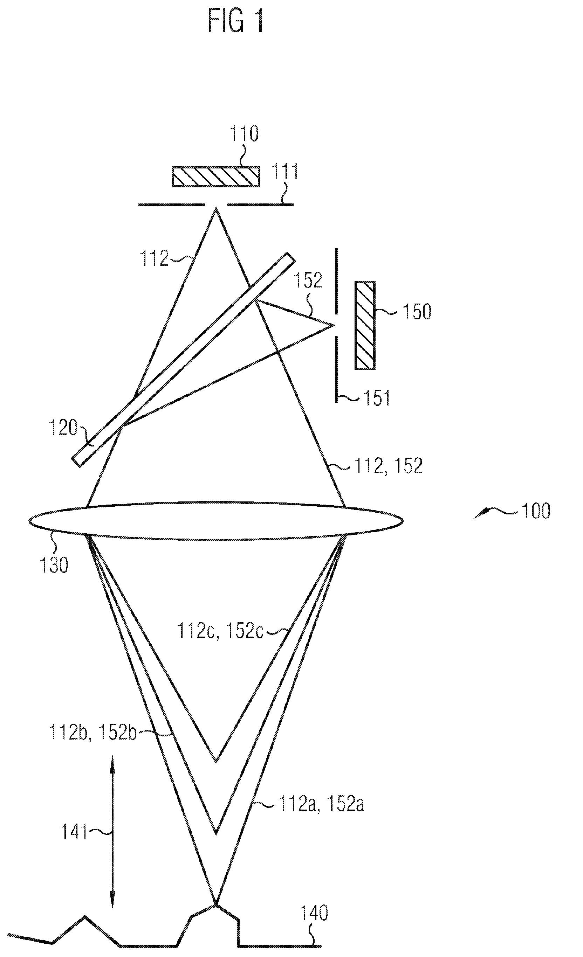

Der in Figur 1 dargestellte einkanalige konfokale optische Abstandssensor 100 weist eine Lichtquelle 110 auf, welche gemeinsam mit einer Lochblende 111 eine sog. Punktlichtquelle darstellt. Diese emittiert einen näherungsweise weißen Beleuchtungsstrahl 112, welcher nach einer Transmission durch einen Strahlteiler 120 auf eine Abbildungsoptik 130 trifft, welche aufgrund einer bewussten chromatischen Fehlkorrektur eine große chromatische Aberration aufweist. Die Abbildungsoptik 130 spaltet den Beleuchtungsstrahl 112 in verschiedene Spektralanteile auf, von denen in Figur 1 ein roter Spektralanteil 112a, ein grüner Spektralanteil 112b und ein blauer Spektralanteil 112c schematisch dargestellt sind. Die Fokuspunkte dieser unterschiedlichen Spektralanteile 112a, 112b, 112c definieren einen Höhenmessbereich 141. Auf der Oberfläche 140 eines Messobjekts werden demzufolge abhängig von der Spektralfarbe des Beleuchtungsstrahls 112 unterschiedlich große Oberflächenbereiche beleuchtet. Demzufolge ist die Leuchtdichte, welche einen von der Oberfläche 140 ausgehenden Messstrahl 152 mit einem roten Spektralanteil 152a, einem grünen Spektralanteil 152b und einem blauen Spektralanteil 152c erzeugt, für jede Spektralfarbe unterschiedlich stark. Der Messstrahl 152, welcher durch eine zumindest teilweise Reflexion des Beleuchtungsstrahls 112 an der zu vermessenden Oberfläche 140 erzeugt wird, wird mittels der Abbildungsoptik 130 auf einen Punktdetektor abgebildet, wobei der Messstrahl 152 zwischen der Abbildungsoptik 130 und dem Punktdetektor an dem Strahlteiler 120 reflektiert wird. Der Punktdetektor wird gemäß dem hier beschriebenen Ausführungsbeispiel durch einen Farbdetektor 150 realisiert, welcher hinter einer Lochblende 151 angeordnet ist. Abhängig von der Höhenlage der zu vermessenden Oberfläche 140 wird die konfokale Bedingung zwischen der Punktlichtquelle bzw. dem Punktdetektor und der Oberfläche nur für eine Spektralfarbe erfüllt, welche von der gesamten Intensität, die von dem Punktdetektor erfasst wird, den mit Abstand größten Anteil ausmacht. Auf diese Weise ist die Farbe des von dem Punktdetektor detektierten Lichtes ein Maß für den Abstand zwischen dem Abstandssensor 100 und der Oberfläche des Messobjekts.

Es wird darauf hingewiesen, dass bei dem in Figur 1 dargestellten Abstandssensor 100 die Position der Punktlichtquelle mit der Position des Punktdetektors vertauscht werden kann. In diesem Fall trifft das Beleuchtungslicht über eine Reflexion an dem Strahlteiler 120 auf die Abbildungsoptik 130 und das Messlicht erreicht den Punktdetektor nach einer Transmission durch den Strahlteiler 120.

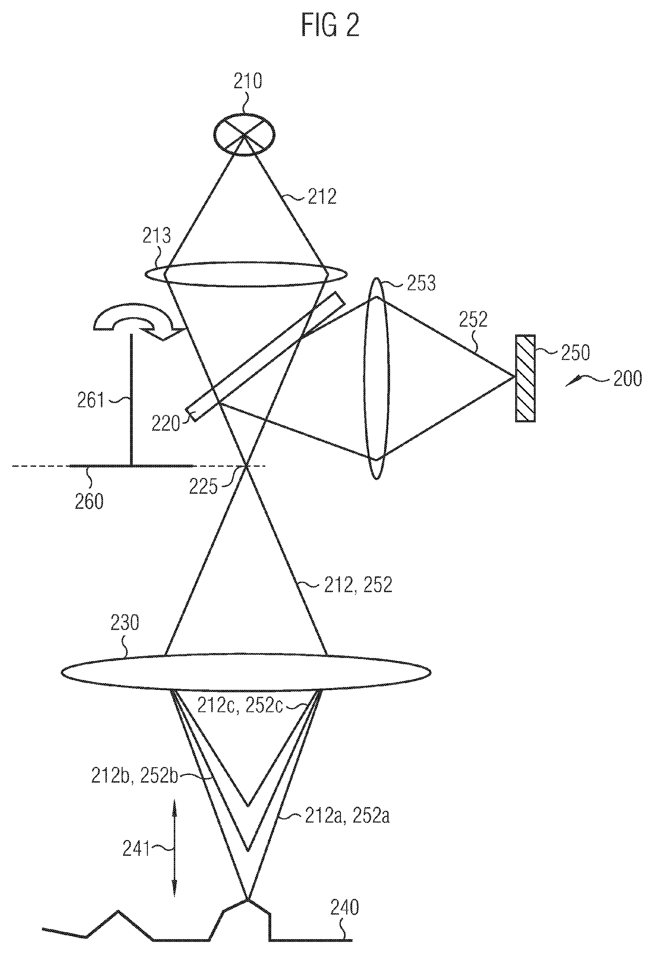

Figur 2 zeigt einen mehrkanaligen Abstandssensor 200 gemäß einem zweiten Ausführungsbeispiel der Erfindung. Der Abstandssensor 200 weist eine flächige Lichtquelle 210 auf, welche ein weißes Beleuchtungslicht mit einer großen spektralen Bandbreite emittiert. Aus Gründen der Übersichtlichkeit ist von der Vielzahl von Beleuchtungsstrahlen, welche von der flächigen Lichtquelle 210 emittiert werden, nur ein von einem einzigen Flächenelement der Lichtquelle 210 ausgehender Beleuchtungsstrahl 212 dargestellt. Der Beleuchtungsstrahl 212 wird mittels einer Abbildungsoptik 230, welche bevorzugt eine geringe chromatische Aberration aufweist, derart abgelenkt, dass nach Transmission durch einen Strahlteiler 220 ein Zwischenbild 225 des Flächenelements der Lichtquelle 210 erzeugt wird.

In der Ebene des Zwischenbilds 225 befindet sich eine Nipkow-Scheibe 260, welche um eine Drehachse 261 rotiert. Auf diese Weise erzeugt die Nipkow-Scheibe 260 in der Ebene des Zwischenbildes 225 sequentiell jeweils eine Mehrzahl von voneinander beabstandeten Punktlichtquellen. Die durch die Nipkow-Scheibe 260 erzeugten Punktlichtquellen werden über die Abbildungsoptik 230, welche bewusst eine große chromatische Aberration aufweist, auf die zu vermessende Oberfläche 240 abgebildet. Dabei spaltet die Abbildungsoptik 130 den Beleuchtungsstrahl 212 in verschiedene Spektralanteile auf, von denen in Figur 2 ein roter Spektralanteil 212a, ein grüner Spektralanteil 212b und ein blauer Spektralanteil 212c schematisch dargestellt sind. Die Fokuspunkte dieser unterschiedlichen Spektralanteile 212a, 212b, 212c definieren einen Höhenmessbereich 241. Auf der Oberfläche 240 eines Messobjekts werden demzufolge abhängig von der Spektralfarbe des Beleuchtungsstrahls 212 unterschiedlich große Oberflächenbereiche beleuchtet. Je größer die Beleuchtungsfläche auf der Oberfläche 240 ist, desto kleiner ist die Leuchtdichte des jeweiligen Oberflächenbereichs, welche aufgrund einer zumindest teilweisen Rückstreuung des Beleuchtungsstrahls 212 einen Messstrahl 252 erzeugt. Die von dem Beleuchtungsstrahl 212 unterschiedlich groß beleuchteten Oberflächenbereiche der Oberfläche 240 werden über die Abbildungsoptik 230 in die Ebene des Zwischenbildes 225 abgebildet. Dabei weist diejenige Spektralfarbe die mit Abstand größte Lichtintensität auf, die auf der Oberfläche 240 eine möglichst kleine Fläche beleuchtet. Der von der Oberfläche 240 mit der größten Intensität reflektierte Messstrahl 252a tritt dann durch das gleiche Loch der Nipkow-Scheibe 260, welches zuvor für die Beleuchtung der Oberfläche 240 gesorgt hat. Das durch die Nipkow-Scheibe 260 durchtretende Licht wird an dem Strahlteiler 220 reflektiert und über eine Abbildungsoptik 253 auf einen flächigen Farbdetektor 250 abgebildet. Auf diese Weise wirkt das Loch der Nipkow-Scheibe 260 zudem als Punktdetektor, welcher somit automatisch konfokal zur Punktlichtquelle angeordnet ist. Der Spektralanteil des Messstrahls 252, welcher die stärkste Intensität ausmacht, ist somit ein direktes Maß für den Abstand zwischen dem Abstandssensor 200 und dem beleuchteten Oberflächenpunkt der Oberfläche 240. Die Nipkow-Scheibe 260 ermöglicht somit auf vorteilhafte Weise ein sequentielles Abtasten der Oberfläche 240, wobei bei jedem einzelnen Abtastvorgang gleichzeitig eine Mehrzahl von Oberflächenpunkten abgetastet werden.

Es wird darauf hingewiesen, dass an Stelle einer rotierenden Nipkow-Scheibe auch ein Blendensystem mit matrixförmig angeordneten Lochblenden verwendet werden kann, wobei das Raster der Lochblenden an die Ortsauflösung der Farbkamera anzupassen ist. In diesem Fall wird die zu vermessende Oberfläche nicht sequentiell, sondern an einer Mehrzahl von Oberflächenpunkten gleichzeitig vermessen.

Zusammenfassend schafft die Erfindung einen Sensor zur schnellen optischen Abstandsmessung nach dem konfokalen Abbildungsprinzip. Der Sensor umfasst eine Lichtquelle 210, welche ein Beleuchtungslicht 212 mit verschiedenen Spektralanteilen emittiert, und eine Abbildungsoptik 230, durch welche das Beleuchtungslicht 212 auf die Oberfläche 240 eines Messobjekts gerichtet wird, wobei aufgrund einer chromatischen Aberration der Abbildungsoptik 230 unterschiedliche Spektralanteile des Beleuchtungslichts 212 in unterschiedlichen Abständen von der Abbildungsoptik 230 fokussiert werden. Ferner ist ein Strahlteiler 220, welcher derart angeordnet ist, dass Messlicht 252, welches von der Oberfläche 240 zumindest teilweise zurückreflektiert wird, von dem Strahlengang des Beleuchtungslichts 212 räumlich getrennt wird, ein Lichtempfänger 250, welcher das von dem Strahlengang des Beleuchtungslichts 212 räumlich getrennte Messlicht 252 mit einer spektralen Auflösung erfasst, sowie eine Auswerteeinheit vorgesehen, welche aus den für verschiedene Spektralanteile erfassten Intensitäten des Messlichts 252 den Abstand zwischen dem Sensor 200 und der Oberfläche 240 ermittelt.

Ein mehrkanaliger Abstandssensor, mit dem sequentiell jeweils eine Mehrzahl von Oberflächenpunkten vermessen werden können, kann durch den Einsatz einer rotierenden Nipkow-Scheibe 260 realisiert werden, welche in einem Zwischenbild 225 einer flächigen Lichtquelle 210 zwischen der Abbildungsoptik 230 und einer weiteren, das Zwischenbild 225 erzeugenden Abbildungsoptik 230 angeordnet ist. Ein mehrkanaliger Abstandssensor, mit dem eine Mehrzahl von Oberflächenpunkten gleichzeitig vermessen werden können, kann bevorzugt durch eine Anordnung von verschiedenen Lochblenden erzeugt werden, welche jeweils einem Farbdetektor von einer Mehrzahl von Farbdetektoren oder einem Flächenelement eines ortsauflösenden Farbdetektors zugeordnet sind.

## Patentansprüche

1. Sensor zur schnellen optischen Abstandsmessung nach dem konfokalen Abbildungsprinzip mit
• einer Lichtquelle (110, 210), welche ein Beleuchtungslicht (112, 212) mit verschiedenen Spektralanteilen emittiert,
• einer Abbildungsoptik (130, 230), durch welche das Beleuchtungslicht (112, 212) auf die Oberfläche (240) eines Messobjekts gerichtet wird, wobei aufgrund einer chromatischen Aberration der Abbildungsoptik (130, 230) unterschiedliche Spektralanteile des Beleuchtungslichts (112, 212) in unterschiedlichen Abständen von der Abbildungsoptik (130, 230) fokussiert werden,
• einem Strahlteiler (120, 220), welcher derart angeordnet ist, dass Messlicht (152, 252), welches von der Oberfläche (240) zumindest teilweise zurückreflektiert wird, von dem Strahlengang des Beleuchtungslichts (112, 212) räumlich getrennt wird,
• einem Lichtempfänger (150, 250), welcher das von dem Strahlengang des Beleuchtungslichts (112, 212) räumlich getrennte Messlicht (152, 252) mit einer spektralen Auflösung erfasst, und
• einer Auswerteeinheit, welche aus den für verschiedene Spektralanteile erfassten Intensitäten des Messlichts (152, 252) den Abstand zwischen dem Sensor (100, 200) und der Oberfläche (240) ermittelt.

2. Sensor nach Anspruch 1, bei dem auch das Messlicht (152, 252) über die Abbildungsoptik (130, 230) geführt wird.

3. Sensor nach einem der Ansprüche 1 bis 2, bei dem die Lichtquelle (110, 210) eine Weißlichtquelle ist.

4. Sensor nach einem der Ansprüche 1 bis 3, bei dem der Lichtempfänger (150, 250) eine Farbkamera ist.

5. Sensor nach einem der Ansprüche 1 bis 4, bei dem
• die Lichtquelle (110) eine Mehrzahl von Punktlichtquellen aufweist und
• der Lichtempfänger (150) eine Mehrzahl von Punktdetektoren aufweist,
wobei jeweils ein Punktdetektor und eine Punktlichtquelle einander zugeordnet und konfokal zueinander angeordnet sind.

6. Sensor nach Anspruch 5, bei dem zur Realisierung der Punktlichtquellen und/oder der Punktdetektoren jeweils ein Blendensystem mit einer Mehrzahl von Lochblenden verwendet wird.

7. Sensor nach Anspruch 6, bei dem das Blendensystem eine eindimensionale Lochblendenzeile oder eine zweidimensionale Lochblendenmatrix ist.

8. Sensor nach Anspruch 6 oder 7, bei dem das Blendensystem zusätzlich eine Anordnung von Mikrolinsen aufweist.

9. Sensor nach einem der Ansprüche 1 bis 4, bei dem zusätzlich zumindest eine weitere Abbildungsoptik (213) vorgesehen ist, welche derart in dem Strahlengang des Beleuchtungslichtes (212) angeordnet ist, dass in dem Bereich zwischen der weiteren Abbildungsoptik (213) und der Abbildungsoptik (230) ein Zwischenbild (225) der Lichtquelle (210) entsteht.

10. Sensor nach Anspruch 9, bei dem in dem Bereich des Zwischenbildes (225) ein Blendensystem angeordnet ist, welches zumindest eine Lochblende aufweist.

11. Sensor nach Anspruch 10, bei dem
• das Blendensystem eine rotierende Nipkow-Scheibe (260) und
• der Lichtempfänger (250) ein Flächendetektor ist.

12. Sensor nach Anspruch 10, bei dem
das Blendensystem eine stationäre eindimensionale oder zweidimensionale Lochblendenmatrix aufweist und der Lichtempfänger (250) ein eindimensional oder zweidimensional ortsauflösender Flächendetektor ist.
